# FASCICULE DE BREVET EUROPEEN

(11) **EP 0 810 978 B1**
(45) Date de publication et mention de la délivrance du brevet: **29.05.2002**
(21) Numéro de dépôt: 96943176.6
(22) Date de dépôt: 20.12.1996
(51) Int. Cl.: C03B 35/20, C03B 23/025, C03B 23/03, C03B 27/044

(54) **PROCEDE POUR LE BOMBAGE ET/OU LA TREMPE DE VITRAGES ET CADRE DE BOMBAGE POUR L'EXECUTION DU PROCEDE**
VERFAHREN ZUM BIEGEN UND HÄRTEN VON FLACHGLAS UND BIEGEFORM DAZU
METHOD FOR BENDING AND/OR TEMPERING SHEET GLASS AND BENDING FRAME THEREFOR

(30) Priorité: 22.12.1995 DE 19547935
(43) Date de publication de la demande: 10.12.1997
(73) Titulaire: SAINT-GOBAIN GLASS FRANCE, 92400 Courbevoie (FR)
(72) Inventeur: RIJKENS, Ludwic, Johan, NL-6464 XJ Kerkrade (NL); THEVISSEN, Hans, Josef, D-52525 Heinsberg (DE); STIEL, Franz, D-52076 Aachen (DE); SCHMITZ, Jürgen, D-52134 Herzogenrath (DE); TIMMERMANN, Alwin, D-50933 Köln (DE)
(74) Mandataire: Le Cam, Stéphane Georges Elie
(86) Numéro de dépôt international: FR9602060
(87) Numéro de publication internationale: WO9723420

(56) Documents cités:
- FR-A- 1 227 869
- FR-A- 2 572 388
- FR-A- 2 667 308
- US-A- 3 257 185

## Description

La présente invention concerne un procédé pour le bombage et/ou le transport et/ou la trempe d'un vitrage pourvu d'une ouverture, en position horizontale, avec utilisation d'un cadre de bombage supportant le vitrage tout le long de son pourtour, présentant une forme géométrique correspondant au contour et à la forme souhaitée du vitrage. L'invention a trait en outre à un cadre de bombage destiné à l'exécution du procédé.

Dans le cas des procédés habituels pour le bombage et la trempe de vitrages, tels qu'ils sont mis en oeuvre par exemple pour la fabrication de vitrages automobiles bombés, les vitrages à bomber sont chauffés à la température de bombage en position horizontale dans un four continu, sont bombés dans un poste de bombage et sont trempés thermiquement, dans un poste de trempe qui suit, par refroidissement brusque avec de l'air. Dans le cas de tous les procédés habituels de ce type, on utilise, pour le bombage et/ou pour le transport du verre bombé et/ou pour la trempe, des cadres de bombage qui correspondent dans leur configuration géométrique à la forme souhaitée du vitrage à fabriquer. Par exemple, de tels cadres de bombage sont utilisés dans le procédé connu sous le nom de bombage par gravité, tel qu'il est décrit dans le document DE 2 945 776 C2. Dans le cas de ce procédé, le verre plat à bomber est soulevé au moyen d'une plaque-ventouse, est déposé sur un tel cadre de bombage et est acheminé avec ce dernier dans le poste de trempe. Dans le cas du procédé qualifié de bombage par compression, de tels cadres de bombage sont utilisés en tant que formes de bombage périphériques, avec lesquelles le vitrage est pressé contre une forme de bombage convexe supérieure qui couvre toute la surface. Dans une forme d'exécution habituelle du procédé de bombage par compression, on fait passer les vitrages bombés à un poste de trempe situé en aval à l'aide de ce cadre de bombage utilisé en tant que forme de bombage. Dans une autre forme d'exécution connue du procédé de bombage par compression, le vitrage pressé avec un tel cadre de bombage est maintenu par dépression contre la forme de bombage supérieure et, après enlèvement du cadre de bombage, il est déposé sur un autre cadre, avec lequel il est alors transporté au poste de trempe. Il existe aussi des procédés connus pour le bombage et la trempe de vitrages, dans lesquels de tels cadres de bombage ne sont utilisés que pour le transport des vitrages bombés, tandis que la force de bombage dans le poste de bombage est appliquée par d'autres moyens, par exemple par un flux d'air chaud s'écoulant vers le haut ou par des outils de pressage qui couvrent toute la surface.

Dans la mesure où de tels cadres de bombage servent de cadres porteurs pour les vitrages dans le poste de trempe, il sont pourvus, sur leur côté supérieur, de saillies ou d'évidements afin que l'air de soufflage dirigé contre la face inférieure des vitrages atteigne la zone marginale des vitrages et puisse aussi assurer à cet endroit le refroidissement brusque nécessaire à l'obtention de la trempe requise.

Il est apparu que les procédés connus dans lesquels les vitrages, dans leur état ramolli apte au bombage, sont bombés avec les cadres de bombage connus et/ou sont portés par ceux-ci, ne mènent pas toujours aux résultats optimums. En particulier, il peut arriver, lors du bombage et/ou de la trempe de vitrages qui sont pourvus d'une ouverture ménagée à l'intérieur de leur face, que le vitrage bombé présente dans son profil de bombage des discontinuités, qui ont un effet optique gênant. La présence d'une ou de plusieurs ouvertures à l'intérieur du vitrage, qui présentent aussi dans certaines circonstances de plus grandes dimensions, peut cependant être souhaitée, par exemple lorsque des émetteurs ou des récepteurs de signaux doivent être disposés à l'intérieur du vitrage pour un rayonnement électromagnétique qui subit une trop forte atténuation lors du passage à travers le vitrage. Les discontinuités dans le profil de bombage apparaissant dans le cas de vitrages pourvus d'ouvertures, peuvent apparaître tant pendant l'opération de bombage proprement dite qu'après l'opération de bombage proprement dite, sous l'effet de la gravité sur les vitrages, tant que le vitrage repose à l'état déformable sur le cadre de bombage.

L'invention a pour but de procurer un procédé du type mentionné dans le préambule qui permette de bomber et/ou de tremper des vitrages pourvus d'une ouverture, au moyen d'une installation de bombage habituelle ou d'une installation de bombage et de trempe habituelle, sans que n'apparaissent à l'intérieur du vitrage, et en particulier dans les environs de l'ouverture du verre, des discontinuités de bombage et/ou des déformations gênantes du point de vue optique.

Ce but est atteint suivant l'invention par le fait que le vitrage est soutenu mécaniquement dans la zone marginale de l'ouverture du verre par des éléments de support agissant selon la surface de la forme désirée pour le vitrage pendant l'opération de bombage et/ou pendant le transport du poste de bombage au poste de trempe et/ou pendant l'opération de trempe.

De façon particulièrement avantageuse, le procédé selon l'invention peut être conduit de telle sorte que le vitrage, dans la zone marginale de l'ouverture du verre, soit soutenu par un élément de support en forme de cadre, qui supporte la zone marginale de l'ouverture du verre sur tout son pourtour. En variante le soutien du vitrage dans la zone marginale de l'ouverture du verre peut également être réalisé par un élément de support en forme de plaque qui couvre toute la surface, dont la forme correspond à l'ouverture dans le vitrage, mais est un peu plus grande que celle-ci, de sorte que la zone marginale du vitrage qui entoure l'ouverture repose sur toute sa longueur sur cette surface.

Dans une variante selon l'invention, le vitrage est soumis à un bombage par compression, c'est-à-dire que durant l'étape de bombage, le vitrage supporté par le cadre de bombage est pressé contre une forme convexe supérieure, couvrant toute la surface du vitrage. Cette forme supérieure vient donc avantageusement presser le vitrage et plus précisément la zone marginale de l'ouverture contre les éléments de support agissant sur ladite zone marginale.

Il s'est avéré qu'il est possible à l'aide du procédé conforme à l'invention de conférer un bombage sans défaut même à des vitrages qui présentent une ouverture relativement grande, ce qui est particulièrement difficile lorsque l'ouverture se trouve à proximité du bord du vitrage.

L'invention a également pour but un vitrage bombé et/ou trempé comportant une ouverture, et dont les faces discontinues, du fait de l'ouverture, présentent une courbure continue. Selon l'invention, le vitrage bien que comportant une ouverture et donc des faces discontinues, présente un profil de bombage continu, il ne présente ainsi pas de défaut en bordure de l'ouverture pouvant conduire à des effets optiques gênants.

L'ouverture pourrait être destinée à recevoir un émetteur et/ou récepteur de signaux, tel qu'un feu stop, celui-ci étant fixé de façon à affleurer à au moins une surface dudit vitrage, sur le pourtour de l'ouverture. Il est ainsi possible d'encastrer un émetteur et/ou un récepteur, sans nécessiter la présence d'un cadre ou profilé jouant le rôle d'intercalaire entre l'émetteur et/ou le récepteur et le pourtour de l'ouverture; de tels intercalaires devraient être utilisés pour masquer les défauts de courbure autour du trou et garantir une étanchéité vis-à-vis de l'humidité, de l'air et/ou de la lumière, si le vitrage était obtenu selon les techniques connues de bombage.

D'autres particularités et avantages du procédé conforme à l'invention ressortiront des revendications dépendantes et de la description suivante d'un exemple de réalisation préféré d'un cadre de bombage approprié pour le procédé selon l'invention donnée avec référence aux dessins annexés.

Dans les dessins :
la Fig. 1 montre un vitrage, pourvu d'une ouverture, qui doit être bombé de manière sphérique et trempé, et
la Fig. 2 montre un cadre de bombage selon l'invention pour le bombage et la trempe du vitrage représenté sur la Fig. 1.

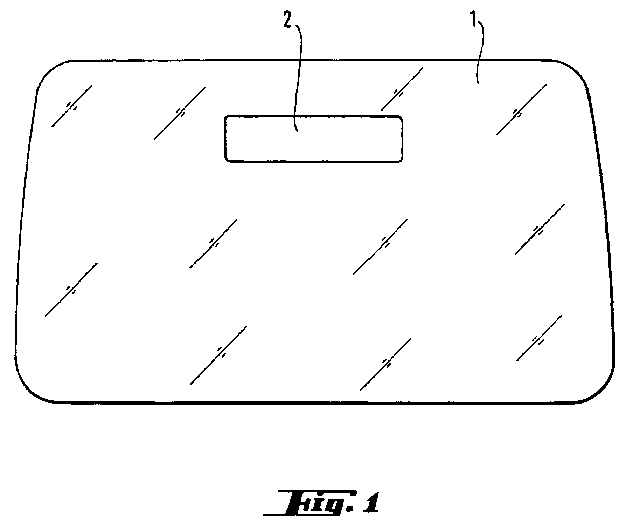

Dans le cas du vitrage 1 représenté sur la Fig. 1, il s'agit d'une lunette arrière pour automobiles, qui est pourvue, dans sa partie supérieure, d'une ouverture 2. L'ouverture 2 doit servir pour l'installation d'un feu stop supplémentaire, qui doit être fixé dans cette ouverture. L'ouverture 2 dans le vitrage est découpée avantageusement à l'aide d'une machine de coupe à jet d'eau sous haute pression avec commande de positionnement XY, le jet d'eau sous haute pression étant additionné d'un agent abrasif approprié, par exemple sous la forme de grains de corindon.

Des ouvertures de ce type peuvent être réalisées avec des machines de coupe à jet d'eau sous haute pression courantes dans le commerce, d'autres procédés et dispositifs selon l'état de la technique pouvant bien entendu aussi être utilisés pour la découpe de l'ouverture 2.

Le vitrage 1 doit être bombé selon le procédé de bombage par gravité selon une forme sphérique et être ensuite trempé thermiquement par soufflage brusque avec de l'air. Dans ce procédé de bombage, le vitrage plat pourvu de l'ouverture 2 est chauffé en position horizontale à la température de bombage dans un four continu, est saisi et soulevé, lorsqu'il a atteint la température de bombage, par une plaque-ventouse plate déplaçable, et est amené à l'aide de la plaque-ventouse verticalement au-dessus d'un cadre de bombage selon l'invention, puis libéré par la plaque-ventouse au-dessus du cadre de bombage. Le vitrage tombe par conséquent sur le cadre de bombage et s'applique sur ce dernier sous l'effet de l'énergie cinétique de chute et de son poids propre.

Puisque dans ce cas le cadre de bombage sert simultanément de cadre de transport pour le transport du verre bombé au poste de trempe et de cadre porteur pendant le processus de trempe, le cadre de bombage doit être formé de telle sorte que la zone marginale du vitrage soit également trempée par le flux d'air de soufflage. En principe pour la configuration du cadre de bombage, on peut choisir les constructions connues à cet effet, telles qu'elles sont décrites par exemple dans les documents EP 0 186 529 B1, WO 93/02017 ou U.S. n° 5 118 335.

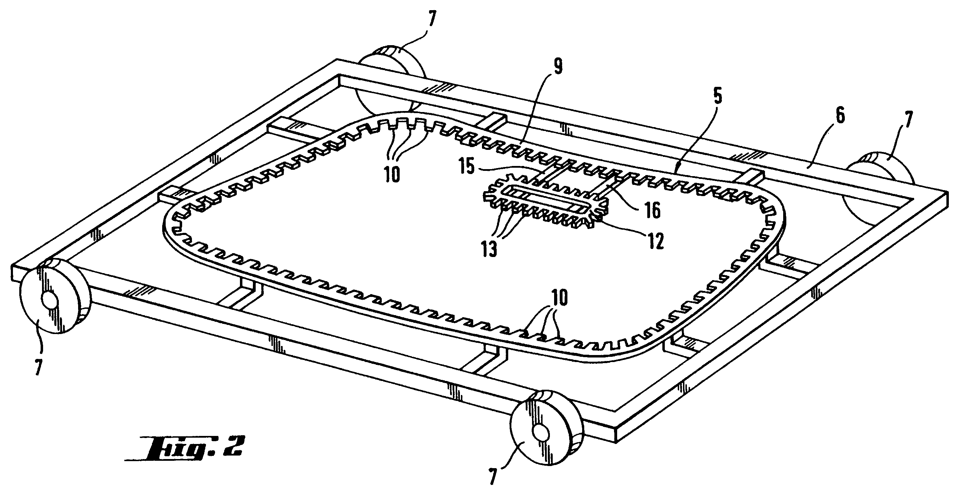

Comme le montre la Fig. 2, le cadre de bombage 5 est disposé sur un chariot 6, qui peut être déplacé sur des rails grâce aux roues 7 à l'intérieur d'une installation de bombage et de trempe. Le cadre de bombage 5 comprend un cadre 9 fermé extérieur, dont la forme correspond au contour et à la forme souhaitée du vitrage bombé. Le cadre 9 est pourvu de façon connue sur le côté intérieur de saillies en forme de doigts, dont les espaces intermédiaires forment des canaux d'écoulement pour l'air de refroidissement. A l'intérieur du cadre 9, est disposé, à l'endroit qui correspond à la position de l'ouverture du verre 2 un deuxième cadre 12 fermé sur lui-même. Ce cadre 12 correspond dans sa forme et sa grandeur à la forme et la grandeur de l'ouverture du verre 2. Il est formé de manière que, d'une part, le bord de l'ouverture du verre soit soutenu tout le long de son pourtour, mais que, d'autre part, des canaux d'écoulement soient à nouveau formés pour l'air de soufflage par la présence de saillies 13, de telle sorte que le vitrage soit aussi refroidi brusquement par l'air de soufflage sur la surface périphérique de l'ouverture du verre et soit ainsi soumis à des contraintes de compression. La forme superficielle géométrique de la surface d'appui de ce cadre intérieur 12 doit être conçue conformément à la forme souhaitée du vitrage bombé, de telle sorte que le vitrage, lorsqu'il est appliqué à ce cadre intérieur 12, prenne également exactement la forme souhaitée dans la zone proche de l'ouverture 2, sans que n'apparaissent dans le vitrage des défauts gênants du point de vue optique.

Tant le cadre extérieur 9 que le cadre intérieur 12 peuvent être respectivement formés d'une pièce ou être constitués de plusieurs parties, qui peuvent être ajustées en hauteur séparément, de sorte qu'un ajustement ultérieur et un réglage fin du cadre de bombage deviennent possibles. Le cadre intérieur 12 est fixé de manière amovible au cadre extérieur 9 ou au cadre du chariot 6 par l'intermédiaire d'entretoises de fixation 15, 16. On peut fabriquer à l'aide du même cadre de bombage 9 des vitrages présentant une ouverture par fixation facultative du cadre intérieur 12 et des vitrages sans ouverture après enlèvement du cadre intérieur 12. La fixation peut également être réalisée de telle sorte qu'elle permette un réglage fin ou une correction de la position du cadre 12.

## Revendications

1. Procédé pour le bombage et/ou le transport et/ou la trempe d'un vitrage (1) pourvu d'une ouverture (2) avec utilisation d'un cadre de bombage (5, 9) supportant le vitrage présentant une forme géométrique correspondant au contour du vitrage (1), ***caractérisé en ce que*** le vitrage (1) est soutenu dans la zone marginale de l'ouverture (2) du verre afin d'éviter des déformations génantes du point de vue optique, par des éléments de support (12) agissant selon la surface de la forme désirée pour le vitrage pendant l'opération de bombage et/ou pendant le transport du poste de bombage au poste de trempe et/ou pendant l'opération de trempe.

2. Procédé suivant la revendication 1, ***caractérisé en ce que*** le vitrage est soutenu dans la zone marginale de l'ouverture (2) du verre par un élément de support en forme de cadre (12), qui supporte le bord de l'ouverture (2) sur tout son pourtour.

3. Procédé selon l'une des revendications 1 ou 2, ***caractérisé en ce que*** durant l'étape de bombage, le vitrage (1) supporté par le cadre de bombage (5, 9) est pressé contre une forme convexe supérieure.

4. Cadre de bombage (5, 9) pour l'exécution du procédé selon l'une des revendications 1 à 3, présentant une forme correspondant au contour et à la forme souhaitée du vitrage (1), ***caractérisé en ce qu'**un* élément de soutien (12) supplémentaire présentant une surface de bombage supplémentaire est disposé à l'intérieur du cadre de bombage (5, 9) correspondant au contour du vitrage (1) dans la zone correspondant à la zone marginale de l'ouverture du verre.

5. Cadre de bombage selon la revendication 4, ***caractérisé en ce que*** l'élément de soutien supplémentaire a la forme d'un cadre (12), qui soutient la zone marginale de l'ouverture (2) du vitrage (1) tout le long de son contour.

6. Cadre de bombage selon la revendication 4, ***caractérisé en ce que*** l'élément de soutien (12), est constitué de plusieurs parties, qui sont fixées de manière réglable séparément ou dans leur ensemble en hauteur et/ou en inclinaison.

7. Cadre de bombage selon l'une quelconque des revendications 4 à 6, ***caractérisé en ce que*** l'élément de soutien supplémentaire (12) est fixé de manière amovible au cadre de bombage (5, 9) correspondant au contour du vitrage (1).

8. Cadre de bombage (5, 9) suivant l'une quelconque des revendications 4 à 7, ***caractérise en ce que*** l'élément de soutien (12) est pourvu, sur la surface entrant en contact avec le vitrage (1), de saillies et/ou de créneaux (13) qui forment des canaux d'écoulement pour l'air de soufflage nécessaire à la trempe.

## Patentansprüche

1. Verfahren zum Biegen und/oder Transportieren und/oder Vorspannen einer mit einem Ausschnitt (2)versehenen Glasscheibe (1) unter Verwendung eines die Glasscheibe abstützenden Formrings (5, 9) mit einer dem Umriss der Glasscheibe (1) entsprechenden geometrischen Form, **dadurch gekennzeichnet, dass** zur Vermeidung von optisch störenden Deformationen die Glasscheibe (1) während des Biegevorgangs und/oder während des Transports von der Biegestation in die Vorspannstation und/oder während des Vorspannvorgangs im Randbereich des Glasausschnitts zur durch in der Fläche der gewünschten Scheibenform wirkende Stützelemente (12) mechanisch abgestützt wird.

2. Verfahren nach Anspruch 1, **dadurch gekennzeichnet, dass** die Glasscheibe im Randbereich des Glasausschnitts (2) durch ein ringförmiges Stützelement (12) abgestützt wird, das den Rand des Glasausschnitts (2) auf seinem gesamten Umfang abstützt.

3. Verfahren nach Anspruch 1 oder 2, **dadurch gekennzeichnet, dass** die durch den Formring (5, 9) abgestützte Glasscheibe (1) während des Biegevorgangs gegen eine obere konvexe Biegeform gepresst wird.

4. Formring (5, 9) zur Durchführung des Verfahrens nach einem der Ansprüche 1 bis 3, mit einer dem Umriss und der gewünschten Form der Glasscheibe entsprechenden Form, **dadurch gekennzeichnet, dass** innerhalb des dem Umriss der Glasscheibe (1) entsprechenden Formrings (5, 9) in dem dem Randbereich des Glasausschnitts entsprechenden Bereich ein zusätzliches Stützelement (12) mit einer zusätzlichen Formfläche angeordnet ist.

5. Formring nach Anspruch 4, **dadurch gekennzeichnet, dass** das zusätzliche Stützelement in Form eines Ringes (12) ausgebildet ist, der den Randbereich des Scheibenausschnitts (2) der Glasscheibe (1) entlang seinem gesamten Umfang unterstützt.

6. Formring nach Anspruch 4, **dadurch gekennzeichnet, dass** das Stützelement (12) aus mehreren Teilen besteht, die einzeln oder insgesamt in der Höhe und/oder in ihrer Neigung einstellbar befestigt sind.

7. Formring nach einem der Ansprüche 4 bis 6, **dadurch gekennzeichnet, dass** das zusätzliche Stützelement (12) an dem dem Umriss der Glasscheibe (1) entsprechenden Formring (5, 9) lösbar befestigt ist.

8. Formring (5, 9) nach einem der Ansprüche 4 bis 7, **dadurch gekennzeichnet, dass** das Stützelement (12) auf der mit der Glasscheibe (1) in Kontakt kommenden Oberfläche mit Vorsprüngen und/oder Durchbrechungen (13) versehen ist, die Abströmkanäle für die zum Vorspannen erforderliche Blasluft bilden.

## Claims

1. Method for the bending and/or transportation and/or tempering of a window (1) provided with an opening (2) with use of a bending frame (5,9) supporting the window having a geometric form corresponding to the outline of the window (1), **characterised in that** the window (1) is held up in the marginal area of the opening (2) in the glass (in order to avoid deformations which interfere from the optical point of view) by support elements (12) acting according to the surface of the form desired for the window during the bending operation and/or during transportation from the bending station to the tempering station and/or during the tempering operation.

2. Method according to Claim 1, **characterised in that** the window is held up in the marginal area of the opening (2) in the glass by a support element in the form of a frame (12), which supports the edge of the opening (2) over its entire perimeter.

3. Method according to either of Claims 1 or 2, **characterised in that**, during the bending step, the window (1) supported by the bending frame (5, 9) is pressed against an upper convex form.

4. Bending frame (5, 9) for implementing the method according to one of Claims 1 to 3, having a form corresponding to the outline and desired form of the window (1), **characterised in that** an additional holding-up element (12) having an additional bending surface is disposed inside the bending frame (5, 9) corresponding to the outline of the window (1) in the area corresponding to the marginal area of the opening in the glass.

5. Bending frame according to Claim 4, **characterised in that** the additional holding-up element has the form of a frame (12), which holds up the marginal area of the opening (2) in the window (1) all along its outline.

6. Bending frame according to Claim 4, **characterised in that** the holding-up element (12) consists of a number of parts, which are fixed so as to be adjustable separately or as a whole in height and/or inclination.

7. Bending frame according to any one of Claims 4 to 6, **characterised in that** the additional holding-up element (12) is fixed, so as to be removable, to the bending frame (5, 9) corresponding to the outline of the window (1).

8. Bending frame (5, 9) according to any one of Claims 4 to 7, **characterised in that** the holding-up element (12) is provided, on the surface coming into contact with the window (1), with projections and/or slots (13) which form flow channels for the blast of air necessary for tempering.
